# EUROPEAN PATENT APPLICATION

(11) **EP 4 528 890 A1**
(43) Date of publication of application: **26.03.2025**
(21) Application number: 24201394.4
(22) Date of filing: 19.09.2024
(51) Int. Cl.: H01M 10/658, H01M 50/24, H01M 50/251

(54) **OUTDOOR ENERGY STORAGE CABINET AND ENERGY STORAGE SYSTEM**

(30) Priority: 22.09.2023 CN 202322598969 U
(71) Applicant: Sungrow Power Supply Co., Ltd., Hefei, Anhui 230088 (CN)
(72) Inventor: CHENG, Yunfang, HEFEI, 230088 (CN); WANG, Peng, HEFEI, 230088 (CN); ZHANG, Dongfei, HEFEI, 230088 (CN); ZHANG, Haixiao, HEFEI, 230088 (CN)
(74) Representative: Kransell & Wennborg KB

(57) **Abstract**

Provided are an outdoor energy storage cabinet and an energy storage system, which belong to the field of energy storage technologies. The outdoor energy storage cabinet includes an outer cabinet body, a protective layer, and at least one fire protection wire conduit. The outer cabinet body defines an accommodation cavity. The accommodation cavity is configured to accommodate an electronic device and a fire protection device. The protective layer is attached to an inner wall of the outer cabinet body. A wiring space is formed at a surface of the protective layer close to the outer cabinet body. The at least one fire protection wire conduit is arranged in the wiring space. Each of the at least one fire protection wire conduit has an end configured to be in an electrical connection and/or a communication connection with the electronic device and another end configured to be in a corresponding electrical connection and/or communication connection with the fire protection device. By arranging the fire protection wire conduit in the wiring space, a mounting efficiency of the outdoor energy storage cabinet can be improved, ensuring a space utilization rate of the outdoor energy storage cabinet while prolonging a service life of the outdoor energy storage cabinet and improving safety of the outdoor energy storage cabinet.

## Description

### FIELD

The present disclosure relates to the field of energy storage technologies, and more particularly, to an outdoor energy storage cabinet and an energy storage system.

### BACKGROUND

The demand for an outdoor energy storage cabinet is gradually increasing due to its advantages of high convenience, high modularity, and easy transportation and mounting, and fire safety requirements are also getting higher and higher. However, at present, when fire protection wire conduits are mounted for the outdoor energy storage cabinet, they are usually arranged in form of open wires, which not only leads to a low mounting efficiency of the outdoor energy storage cabinet and reduces a space utilization rate of the outdoor energy storage cabinet, but also reduces aesthetics and a service life of the outdoor energy storage cabinet.

### SUMMARY

The present disclosure aims to solve at least one of the technical problems in the related art. To this end, the present disclosure provides an outdoor energy storage cabinet and an energy storage system. By arranging a fire protection wire conduit in a wiring space, a mounting efficiency of the outdoor energy storage cabinet can be improved, ensuring a space utilization rate of the outdoor energy storage cabinet while prolonging a service life of the outdoor energy storage cabinet and improving safety of the outdoor energy storage cabinet.

In a first aspect, the present disclosure provides an outdoor energy storage cabinet. The outdoor energy storage cabinet includes: an outer cabinet body defining an accommodation cavity, the accommodation cavity being configured to accommodate an electronic device and a fire protection device; a protective layer attached to an inner wall of the outer cabinet body, a wiring space being formed at a surface of the protective layer close to the outer cabinet body; and at least one fire protection wire conduit arranged in the wiring space, each of the at least one fire protection wire conduit having an end configured to be in an electrical connection and/or a communication connection with the electronic device and another end configured to be in a corresponding electrical connection and/or communication connection with the fire protection device.

For the outdoor energy storage cabinet according to the present disclosure, on the one hand, the fire protection wire conduit is arranged in the wiring space separately, which reduces a possibility of thermal runaway occurring in the outer cabinet body due to damage to the fire protection wire conduit, and avoids fast aging of the fire protection wire conduit due to long-term exposure to a high-temperature operation environment of the electronic device and the fire protection device, improving use safety of the outdoor energy storage cabinet. On the other hand, since the wiring space and the accommodation cavity are located at two sides of the protective layer, respectively, i.e., the fire protection wire conduit is arranged in form of hidden wires, pre-processing is provided. In this way, when the outdoor energy storage cabinet is mounted, fire protection requirements can be completed by directly connecting the fire protection wire conduit to the electronic device and the fire protection device that correspond to the fire protection wire conduit, which improves the mounting efficiency. Further, a space utilization rate in the outer cabinet body can be ensured while meeting aesthetic requirements.

According to an embodiment of the present disclosure, the outdoor energy storage cabinet further includes: a plurality of wire holes, at least two of the plurality of wire holes being formed at the protective layer, and the plurality of wire holes being in communication with the wiring space.

According to an embodiment of the present disclosure, the outdoor energy storage cabinet further includes: at least one fire protection wire box mounted in the wiring space and configured to bunch the at least one fire protection wire conduit.

According to an embodiment of the present disclosure, the outer cabinet body has at least one first corner, and the protective layer has at least one second corner, the first corner and the second corner corresponding to each other and allowing the wiring space to have at least one corner region, and the at least one fire protection wire box being located at the corner region.

According to an embodiment of the present disclosure, the fire protection wire conduit includes: a flexible conduit body disposed in the fire protection wire box located at the corner region; and a rigid conduit body having at least one end penetrating the fire protection wire box and in communication with the flexible conduit body.

According to an embodiment of the present disclosure, the fire protection wire box has an avoidance part configured to avoid the second corner.

According to an embodiment of the present disclosure, a fire-resistant thermal insulation layer is disposed between the protective layer and the outer cabinet body.

According to an embodiment of the present disclosure, the fire-resistant thermal insulation layer is made of a rock wool material.

In a second aspect, the present disclosure provides an energy storage system. The energy storage system includes: an electronic device; a fire protection device; and the outdoor energy storage cabinet as described above. The electronic device and the fire protection device are mounted in the outdoor energy storage cabinet.

According to an embodiment of the present disclosure, the electronic device includes a fire protection host computer. The fire protection device includes at least one of a fire protection fan and a detector.

For the energy storage system according to the present disclosure, by arranging the fire protection wire conduit located in an energy storage device in the wiring space, the mounting efficiency of the outdoor energy storage cabinet can be improved, ensuring the space utilization rate of the outdoor energy storage cabinet while prolonging the service life of the outdoor energy storage cabinet and improving safety of the outdoor energy storage cabinet.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic view of a structure of an outdoor energy storage cabinet according to an embodiment of the present disclosure.
FIG. 2 is a partial sectional view of an outdoor energy storage cabinet according to an embodiment of the present disclosure.
FIG. 3 is a schematic partial view of an outdoor energy storage cabinet according to an embodiment of the present disclosure.
FIG. 4 is a schematic view of an energy storage system according to an embodiment of the present disclosure.

Reference numerals of the accompanying drawings:
110, outer cabinet body; 111, first corner;
120, protective layer; 121, second corner;
130, wiring space;
140, fire protection wire conduit; 141, flexible conduit body; 142, rigid conduit body;
150, wire hole;
160, fire protection wire box;
170, fire-resistant thermal insulation layer;
180, fire protection device;
190, electronic device;
200, energy storage battery.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

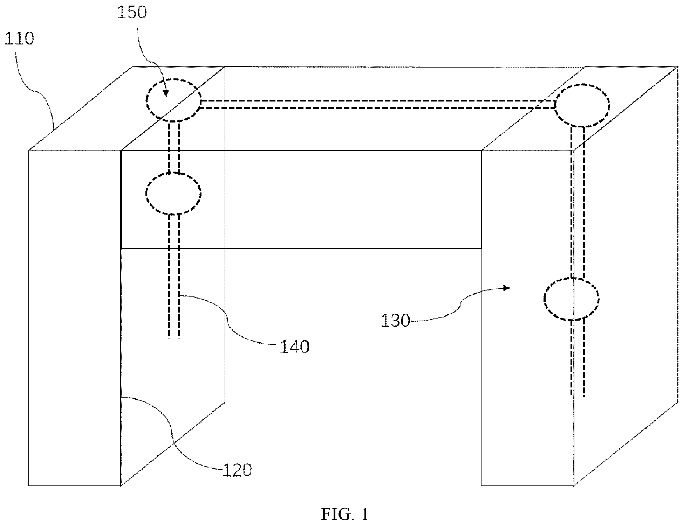

An outdoor energy storage cabinet according to the embodiments of the present disclosure is described below with reference to FIG. 1 to FIG. 3. The outdoor energy storage cabinet includes an outer cabinet body 110, a protective layer 120, and at least one fire protection wire conduit 140.

The outer cabinet body 110 defines an accommodation cavity configured to accommodate an electronic device 190 and a fire protection device 180. The outer cabinet body 110 is made of, but is not limited to being made of, stainless steel, aluminum alloy, titanium alloy, or the like. In this embodiment, for convenience of mounting of the outdoor energy storage cabinet, the outer cabinet body 110 is made of a plurality of first decorative plates connected in sequence. Connection manners between the plurality of first decorative plates include, but are not limited to, bolt connection, rivet connection, welding, snap-fit, or the like.

The protective layer 120 is attached to an inner wall of the outer cabinet body 110. A wiring space 130 is formed at a surface of the protective layer 120 close to the outer cabinet body 110. It should be noted that, the outer cabinet body 110 is made of, but is not limited to being made of, stainless steel, aluminum alloy, titanium alloy, or the like. In this embodiment, the protective layer 120 can be made of a plurality of second decorative plates connected in sequence. Connection manners between the plurality of second decorative plates include, but are not limited to, bolt connection, rivet connection, welding, snap-fit, or the like.

The fire protection wire conduit 140 is arranged in the wiring space 130. Also, the fire protection wire conduit 140 has an end configured to be in an electrical connection and/or a communication connection with the electronic device 190 and another end configured to be in a corresponding electrical connection and/or communication connection with the fire protection device 180. The fire protection wire conduit 140 is made of, but is not limited to being made of, cast iron, copper, alloy, stainless steel, or the like. It should be understood that a quantity of fire protection wire conduits 140 and the specific distribution of the fire protection wire conduits 140 in the wiring space 130 can be determined as desired. The present embodiment is not limited in this regard.

It should be noted that, when the end of the fire protection wire conduit 140 is in an electrical connection with the electronic device 190, the other end of the fire protection wire conduit 140 is in an electrical connection with the fire protection device 180 to realize power transmission between the electronic device 190 and the fire protection device 180. When the end of the fire protection wire conduit 140 is in a communication connection with the electronic device 190, the other end of the fire protection wire conduit 140 is in a communication connection with the fire protection device 180 to realize communication transmission between the electronic device 190 and the fire protection device 180.

It should be understood that, on the one hand, the fire protection wire conduit 140 is arranged in the wiring space 130 separately, which reduces a possibility of thermal runaway occurring in the outer cabinet body 110 due to damage to the fire protection wire conduit 140, and avoids fast aging of the fire protection wire conduit 140 due to long-term exposure to a high-temperature operation environment of the electronic device 190 and the fire protection device 180, improving use safety of the outdoor energy storage cabinet. On the other hand, since the wiring space 130 and the accommodation cavity are located at two sides of the protective layer 120, respectively, i.e., the fire protection wire conduit 140 is arranged in form of hidden wires, pre-processing is provided. In this way, when the outdoor energy storage cabinet is mounted, fire protection requirements can be completed by directly connecting the fire protection wire conduit 140 to the electronic device 190 and the fire protection device 180 that correspond to the fire protection wire conduit 140, which improves the mounting efficiency. Further, a space utilization rate in the outer cabinet body 110 can be ensured while meeting aesthetic requirements.

With the outdoor energy storage cabinet according to the embodiments in the present disclosure, by arranging the fire protection wire conduit 140 in the wiring space 130, a mounting efficiency of the outdoor energy storage cabinet can be improved, ensuring a space utilization rate of the outdoor energy storage cabinet while prolonging a service life of the outdoor energy storage cabinet and improving safety of the outdoor energy storage cabinet.

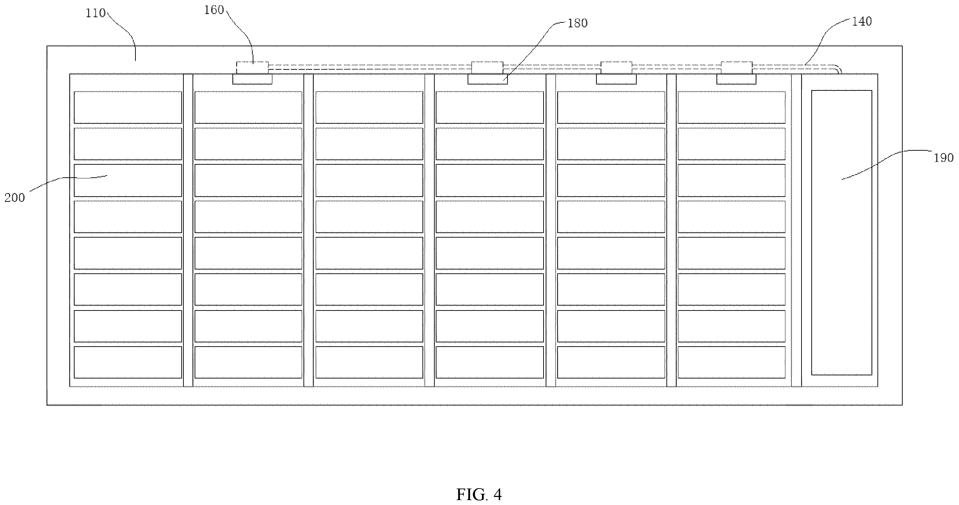

In some embodiments, as illustrated in FIG. 4, the electronic device 190 includes a fire protection host computer. The fire protection device 180 includes at least one of a fire protection fan and a detector. It should be understood that, a power distribution cabinet and a battery compartment are usually placed in an accommodation cavity. The fire protection host computer is mounted in the power distribution cabinet. The fire protection device 180 and heating elements such as an energy storage battery 200 are mounted in the battery compartment. In view of this, when environmental information in the battery compartment is monitored by the detector to be a thermal runaway state, the fire protection host computer generates, based on the environmental information transmitted by the detector, an instruction to the fire protection fan to dissipate heat from the battery compartment, to reduce a temperature in the battery compartment.

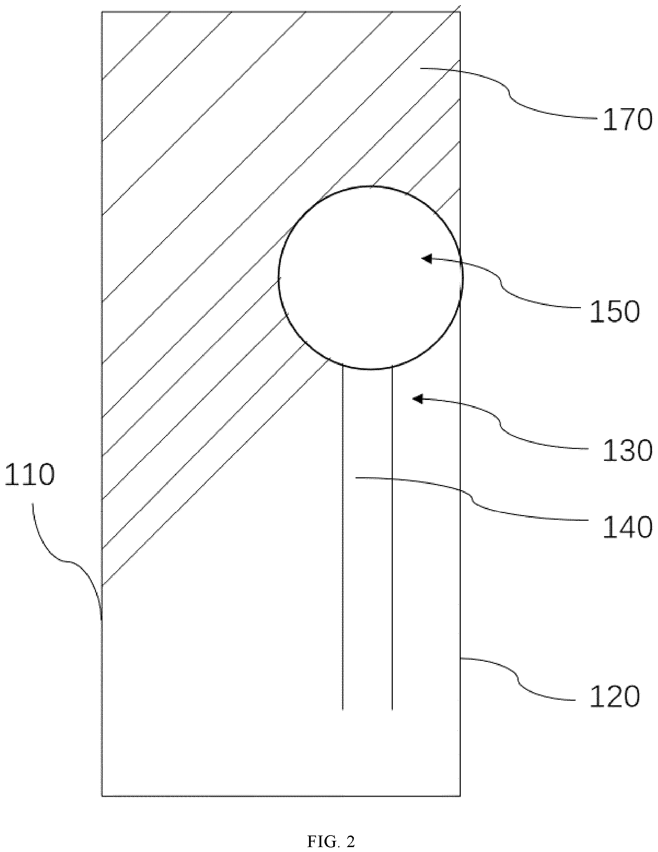

In some embodiments, as illustrated in FIG. 1 and FIG. 2, to realize an electrical connection between the fire protection wire conduit 140 and the electronic device 190, the outdoor energy storage cabinet further includes a plurality of wire holes 150. At least two of the plurality of wire holes 150 are formed at the protective layer 120. The plurality of wire holes 150 is in communication with the wiring space 130.

It should be understood that, the fire protection wire conduit 140 is connected to the electronic device 190 and the fire protection device 180 separately through the wire holes 150, to ensure that when the thermal runaway occurs in the heating elements such as the energy storage battery 200, the fire protection device 180 and the electronic device 190 can make a quick response through the fire protection wire conduit 140 to put out fire in time, reducing a loss. In this embodiment, the outer cabinet body 110 also has a wire hole 150, to allow the fire protection wire conduit 140 to be in communication with an ambient environment directly through the wire hole 150. In this way, an overall wire layout can be further simplified, avoiding a risk of failures caused by realizing a connection with the ambient environment in form of open wires. It should be noted that a quantity of the wire holes 150 and a distribution of the wire holes 150 can be designed as desired. This embodiment is not limited in this regard.

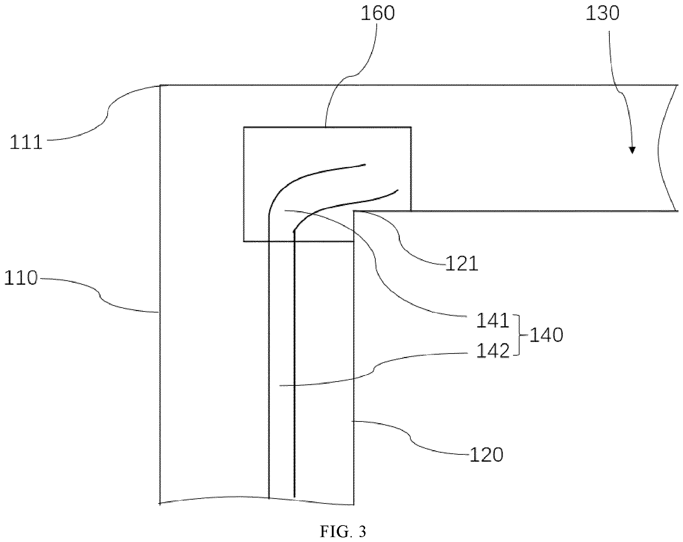

In some embodiments, as illustrated in FIG. 3, the outdoor energy storage cabinet further includes at least one fire protection wire box 160 mounted in the wiring space 130 and configured to bunch the at least one fire protection wire conduit 140. It should be understood that mounting the fire protection wire box 160 in the wiring space 130 can not only facilitate management of the fire protection wire conduit 140, but also reduce wear of the fire protection wire conduit 140 to prolong a service life of the fire protection wire conduit 140. The fire protection wire box 160 is made of, but is not limited to being made of, stainless steel, aluminum alloy, or plastic. It should be understood that a size and a shape of the fire protection wire box 160 can be designed as desired. This embodiment is not limited in this regard.

In this embodiment, as illustrated in FIG. 3, at least two avoidance openings are formed at a side wall of the fire protection wire box 160 and each are in communication with the wiring space 130. The fire protection wire conduit 140 has an end at least sequentially passing through two avoidance openings of one fire protection wire box 160, to enable the fire protection wire box 160 to bunch the fire protection wire conduit 140. It should be understood that a quantity, shapes, and details of avoidance openings can be designed as desired. This embodiment is not limited in this regard.

In some embodiments, as illustrated in FIG. 3, the outer cabinet body 110 has at least one first corner 111. The protective layer 120 has at least one second corner 121. The first corner 111 and the second corner 121 correspond to each other and allow the wiring space 130 to have at least one corner region. The at least one fire protection wire box 160 is located at the corner region. It should be noted that, a quantity of the first corner 111 and a quantity of the second corner 121 are designed based on a shape of the outer cabinet body 110 and a shape of the protective layer 120, respectively. This embodiment is not limited in this regard.

It should be noted that, considering that an angle connection exists between adjacent first decorative plates and between adjacent second decorative plates, that is, the first corner 111 is formed at a connection of two first decorative plates forming an angle connection, and the second corner 121 is formed at a connection of two second decorative plates forming an angle connection, a corresponding corner region is formed in the wiring space 130. Since the fire protection wire conduit 140 has predetermined hardness, the fire protection wire conduit 140 is bunched using the fire protection wire box 160 located at the corner region. Therefore, protection for the fire protection wire conduit 140 can be provided, and control of a bending degree of the fire protection wire conduit 140 can be facilitated, reducing the wear and a fracture risk of the fire protection wire conduit 140.

In some embodiments, as illustrated in FIG. 3, the fire protection wire conduit 140 includes a flexible conduit body 141 and a rigid conduit body 142. The flexible conduit body 141 is disposed in the fire protection wire box 160 located at the corner region. The rigid conduit body 142 has at least one end penetrating the fire protection wire box 160 and in communication with the flexible conduit body 141. It should be understood that due to being softer than the rigid conduit body 142, the flexible conduit body 141 is more adaptable to bending changes, which further reduces the wear and the fracture risk of the fire protection wire conduit 140, prolonging the service life of the fire protection wire conduit 140 and a service life of an energy storage device.

In addition, since the flexible conduit body 141 is softer than the rigid conduit body 142, the flexible conduit body 141 is more likely to be damaged than the rigid conduit body 142. Therefore, by placing the flexible conduit body 141 in the fire protection wire box 160, the flexible conduit body 141, when subjected to an external force, can only be damaged when the external force passes through the fire protection wire box 160, prolonging a service life of the flexible conduit body 141.

It should be noted that the rigid conduit body 142 has an end penetrating the fire protection wire box 160 through the avoidance opening and in communication with the flexible conduit body 141, and another end that may be in communication with the flexible conduit body 141 placed in other fire protection wire box 160 or connected to the fire protection device 180 or the electronic device 190 and the ambient environment. This embodiment is not limited in this regard.

In some embodiments, considering that the fire protection wire box 160 needs to be placed in the wiring space 130, the fire protection wire box 160, when located in the corner region, has an avoidance part configured to avoid the second corner 121 corresponding to the corner region, which avoids interference between the fire protection wire box 160 and the second decorative plate. It should be understood that a shape and a size of the avoidance part can be designed as desired. This embodiment is not limited in this regard.

In some embodiments, a fire-resistant thermal insulation layer 170 is disposed between the protective layer 120 and the outer cabinet body 110 to reduce fire accidents caused by combustion and explosion of fire protection pipelines and narrow a scope of a burning region, further improving the safety of the outdoor energy storage cabinet and reducing losses. It should be understood that a thickness of the fire-resistant thermal insulation layer 170 can be designed as desire. This embodiment is not limited in this regard.

In this embodiment, the fire-resistant thermal insulation layer 170 is made of a rock wool material, which ensures that a space outside the wiring space 130 (i.e., in the accommodation cavity of the outer cabinet body 110) is unaffected when a fire occurs, facilitating a reduction of potential safety hazards. In some embodiments, the fire-resistant thermal insulation layer 170 may also be made of polystyrene foam, extruded polystyrene foam, or polyurethane foam.

In this embodiment, the first decorative plates are spliced to form the outer cabinet body 110, and then the fire protection wire conduit 140 is mounted at the first decorative plate. A desired quantity of wire holes 150 are defined at the first decorative plate. Rock wool is arranged outside the first decorative plate and the fire protection wire conduit 140. Finally, the second decorative plates are attached to the outer cabinet body 110 to form the protective layer 120. A desired quantity of wire holes 150 is defined at the second decorative plate. Thus, the wiring space 130 and the fire-resistant thermal insulation layer 170 are formed.

In this embodiment, the first decorative plate and the second decorative plate are connected to each other through welding to improve stability of a connection between the outer cabinet body 110 and the protective layer 120 and sealing of the wiring space 130.

According to the embodiments of the present disclosure, an energy storage system is further provided. As illustrated in FIG. 4, the energy storage system includes a fire protection device 180 and the above-mentioned outdoor energy storage cabinet connected to the fire protection device 180.

The fire protection device 180 is located in the ambient environment. That is, the fire protection wire conduit 140 of the outdoor energy storage cabinet has two ends connected to the electronic device 190 and the fire protection device 180, respectively.

With the outdoor energy storage cabinet according to the embodiments in the present disclosure, by arranging the fire protection wire conduit 140 located in the energy storage device in the wiring space 130, the mounting efficiency of the outdoor energy storage cabinet can be improved, ensuring the space utilization rate of the outdoor energy storage cabinet while prolonging the service life of the outdoor energy storage cabinet and improving the safety of the outdoor energy storage cabinet.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or plurality of first objects. In addition, "and/or" throughout the specification and claims indicates at least one of the objects associated with "and/or". The character "/" generally indicates that the associated objects before and after the character are in an "or" relationship.

In the description of the present disclosure, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In the description of the present disclosure, "the first feature" and "the second feature" may include one or more of these features.

In the description of the present disclosure, "plurality" means two or more.

In the description of the present disclosure, the first feature "on" or "under" the second feature may mean that the first feature is in direct contact with the second feature, or the first and second features are in indirect contact through another feature between the first and second features.

In the description of the present disclosure, the first feature "above" the second feature means that the first feature is directly above or obliquely above the second feature, or simply means that the level of the first feature is higher than that of the second feature.

Throughout this specification, description with reference to "an embodiment", "some embodiments", "an illustrative embodiment", "an example", "a specific example", "some examples", or the like means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Further, the particular features, structures, materials, or characteristics described here may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. An outdoor energy storage cabinet, comprising:
an outer cabinet body (110) defining an accommodation cavity, the accommodation cavity being configured to accommodate an electronic device (190) and a fire protection device (180);
a protective layer (120) attached to an inner wall of the outer cabinet body (110), a wiring space (130) being formed at a surface of the protective layer (120) close to the outer cabinet body (110); and
at least one fire protection wire conduit (140) arranged in the wiring space (130), each of the at least one fire protection wire conduit (140) having an end configured to be in an electrical connection and/or a communication connection with the electronic device (190) and another end configured to be in a corresponding electrical connection and/or communication connection with the fire protection device (180).

2. The outdoor energy storage cabinet according to claim 1, further comprising:
a plurality of wire holes (150), at least two of the plurality of wire holes (150) being formed at the protective layer (120), and the plurality of wire holes (150) being in communication with the wiring space (130).

3. The outdoor energy storage cabinet according to claim 1 or 2, further comprising:
at least one fire protection wire box (160) mounted in the wiring space (130) and configured to bunch the at least one fire protection wire conduit (140).

4. The outdoor energy storage cabinet according to claim 3, wherein the outer cabinet body (110) has at least one first corner (111), and wherein the protective layer (120) has at least one second corner (121), the first corner (111) and the second corner (121) corresponding to each other and allowing the wiring space (130) to have at least one corner region, and the at least one fire protection wire box (160) being located at the corner region.

5. The outdoor energy storage cabinet according to claim 4, wherein the fire protection wire conduit (140) comprises:
a flexible conduit body (141) disposed in the fire protection wire box (160) located at the corner region; and
a rigid conduit body (142) having at least one end penetrating the fire protection wire box (160) and in communication with the flexible conduit body (141).

6. The outdoor energy storage cabinet according to claim 4, wherein the fire protection wire box (160) has an avoidance part configured to avoid the second corner.

7. The outdoor energy storage cabinet according to claim 1 or 2, wherein a fire-resistant thermal insulation layer (170) is disposed between the protective layer (120) and the outer cabinet body (110).

8. The outdoor energy storage cabinet according to claim 7, wherein the fire-resistant thermal insulation layer (170) is made of a rock wool material.

9. An energy storage system, comprising:
an electronic device (190);
a fire protection device (180); and
the outdoor energy storage cabinet according to any one of claims 1 to 8, wherein the electronic device (190) and the fire protection device (180) are mounted in the outdoor energy storage cabinet.

10. The energy storage system according to claim 9, wherein:
the electronic device (190) comprises a fire protection host computer; and
the fire protection device (180) comprises at least one of a fire protection fan and a detector.
